# EUROPÄISCHE PATENTSCHRIFT

(11) **EP 0 638 024 B1**
(45) Veröffentlichungstag und Bekanntmachung des Hinweises auf die Patenterteilung: **03.04.1996**
(21) Anmeldenummer: 93908783.9
(22) Anmeldetag: 26.04.1993
(51) Int. Cl.: B60L 3/10

(54) **ANTRIEBSANORDNUNG FÜR EIN SCHIENENFAHRZEUG**
DRIVE ARRANGEMENT FOR A RAIL VEHICLE
SYSTEME D'ENTRAINEMENT D'UN VEHICULE SUR RAILS

(30) Priorität: 27.04.1992 AT 864/92
(43) Veröffentlichungstag der Anmeldung: 15.02.1995
(73) Patentinhaber: ELIN ENERGIEANWENDUNG GESELLSCHAFT M.B.H., A-1141 Wien (AT)
(72) Erfinder: GEYER, Hermann, A-2392 Sulz/Wienerwald (AT); HAFNER, Rüdiger, A-2351 Wr. Neudorf (AT); POLASEK, Helmut, A-1140 Wien (AT)
(74) Vertreter: Krause, Peter
(86) Internationale Anmeldenummer: AT9300072
(87) Internationale Veröffentlichungsnummer: WO9322152

(56) Entgegenhaltungen:
- EP-A- 0 218 839
- EP-A- 0 448 147
- DE-A- 2 110 362
- DE-A- 3 244 288
- US-A- 3 577 048
- CONFERENCE RECORD OF THE 1991 IEEE INDUSTRY APPLICATIONS SOCIETY ANNUAL MEETING vol. 1, Mai 1991, pp. 291-297, XP280169; H. MIKI et al.: 'New AC Traction Drive System with Transistor VVVF Inverter'
- BBC NACHRICHTEN vol. 49, Nr. 2, Februar 1967, München, DE, pp. 60-73; K. LÄPPLE : "Achsentlastung und Achslastanpassung bei elektrischen Triebfahrzeugen"

## Beschreibung

Die Erfindung betrifft eine Antriebsanordnung für ein Schienenfahrzeug, bei dem jedes angetriebene Rad mit einem Motor gekuppelt ist, und Stromrichter vorgesehen sind, von denen jeder mit einer Regelung verbunden ist, und jede Regelung im Mittel die gleiche Momentenvorgabe erhält.

Die immer höher werdenden Belastungen durch den Individualverkehr, besonders in den Ballungsgebieten, fordern geeignete Maßnahmen im Bereich des öffentlichen Verkehrs. Europaweit wird der Ausbau des öffentlichen Verkehrs, insbesondere des Straßenbahnnetzes im städtischen Bereich, vorangetrieben. Aber nicht nur ein dichteres Verkehrsnetz, sondern auch eine benutzerfreundliche Gestaltung der Straßenbahnen soll die Akzeptanz dieses Verkehrsmittels wesentlich erhöhen. Die benutzerfreundliche Ausgestaltung soll besonders älteren und behinderten Menschen, Müttern mit Kinderwagen bzw. Kleinkindern, Fahrradfahrern und Reisenden mit Gepäck entgegenkommen.

Die Fußbodenhöhe der konventionellen Straßenbahn liegt bei etwa einem Meter über dem Straßenniveau. Um der oben beschriebenen Personengruppe das problemlose Benutzen der Straßenbahn zu erleichtern, begann man mit der Entwicklung der Niederstflur-Straßenbahn.

Bei der Niederstflur-Straßenbahn wird ein durchgehender ebener Wagenboden in einer Höhe von etwa 20 cm über dem Straßenniveau erreicht, was besondere Lösungen im Bereich des Antriebes erforderte. Um den ebenen Wagenboden zu erreichen muß der Bereich unter dem Wagenboden frei bleiben.

Eine Lösung dafür sieht einen senkrecht angeordneten Elektromotor, welcher über eine elastische Kupplung und ein Achswinkelgetriebe ein Rad antreibt, vor. Man erhält dadurch einen sogenannten Einzelradantrieb.

Aus der DE-OS 2 110 362 ist eine schleudergeregelte Antriebsanordnung für Schienenfahrzeuge bekannt, aus der die Merkmale des Oberbegriffes hervorgehen.

Der EP-OS 0 448 147 ist der mechanische Aufbau für einen Einzelradantrieb für ein Schienenfahrzeug zu entnehmen.

Weiters ist aus der EP-OS 0 218 839 eine Anordnung ersichtlich, bei der ein Stromrichter mit einer Anzahl von Motoren verbunden ist.

Bei allen oben genannten Veröffentlichungen werden Maßnahmen gegen Schleuder- und Gleitvorgänge erst dann eingeleitet, wenn diese bereits aufgetreten sind.

Die Aufgabe der Erfindung besteht nun darin, einen neuen, robusten und ausfallssicheren Einzelradantrieb für schienengebundene Individualverkersmittel zu schaffen, bei dem vorhersehbare Schleuder- und Gleitvorgänge vermieden werden.

Die Aufgabe wird durch die Erfindung gelöst, welche dadurch gekennzeichnet ist, daß jeder Stromrichter, der ein Spannungszwischenkreisumrichter ist, mindestens zwei Motoren, die entweder fremderregte Gleichstrommotoren oder Drehstromasynchronmotoren mit einer flachen Drehmoment/Drehzahlkennlinie sind, an einer Seite des Schienenfahrzeuges speist, und daß jede Regelung aus einem Nachführregelsystem, einer feldorientierten Regelung, die mit einem Steuersatz verbunden ist, der das Pulsmuster für den Wechselrichter des Stromrichters bildet, einer Drehzahlauswertung und einer Flußvorgabe die der feldorientierten Regelung einen Sollfluß vorgibt, besteht, wobei das Nachführregelsystem den Stromistwert von den zugehörigen Motoren und einen entsprechenden Sollwert von der feldorientierten Regelung erhält, die diesen mit dem von einem Fahrtregler vorgegebenen Drehmomentsollwert ermittlt, und daß an die Drehzahlauswertung die Motordrehzahlen und die Drehzahlen von zwei beidseitig vor den angetriebenen Rädern angeordneten Laufrädern gelangt, und daß die Drehzahlauswertung der Laufräder bevorstehende Drehzahlunterschiede der angetriebenen Räder erkennt, wonach die feldorientierte Regelung einen verminderten Sollfluß erhält, wobei die Verminderung in Abhängigkeit vom Drehzahlunterschied erfolgt. Da bei dieser Anordnung keine Starrachse vorgesehen ist, können Schienenfahrzeuge mit niedriger Fußbodenhöhe realisiert werden. Weiters werden auch wenig Stromrichter benötigt, wodurch der Antrieb ausfallssicherer und wirtschaftlicher ist. Er ist jedoch technisch äquivalent einer Anordnung bei der für jeden Motor ein Stromrichter vorgesehen ist. Durch eine relativ flache Drehmomentenkennlinie der Motoren wird ein sehr günstiges Verhalten bei Schleuder- und Gleitvorgängen erreicht, wodurch eine höhere Betriebssicherheit des Schienenfahrzeuges gegeben ist.

Der wesentliche Vorteil der Erfindung besteht in der Erkennung von bevorstehenden Drehzahlunterschieden durch die vor den Antriebsrädern angeordneten Laufrädern, wodurch die Drehmomentenstöße am Antrieb, insbesondere bei einer Fahrt über einen Knoten, eine Weiche oder bei einer Kurvenfahrt verringert werden und die Belastung des mechanischen Aufbaus des Schienenfahrzeuges geringer ist. Die Gefahr von Schleuder- und Gleitvorgängen wird dabei gänzlich ausgeschlossen.

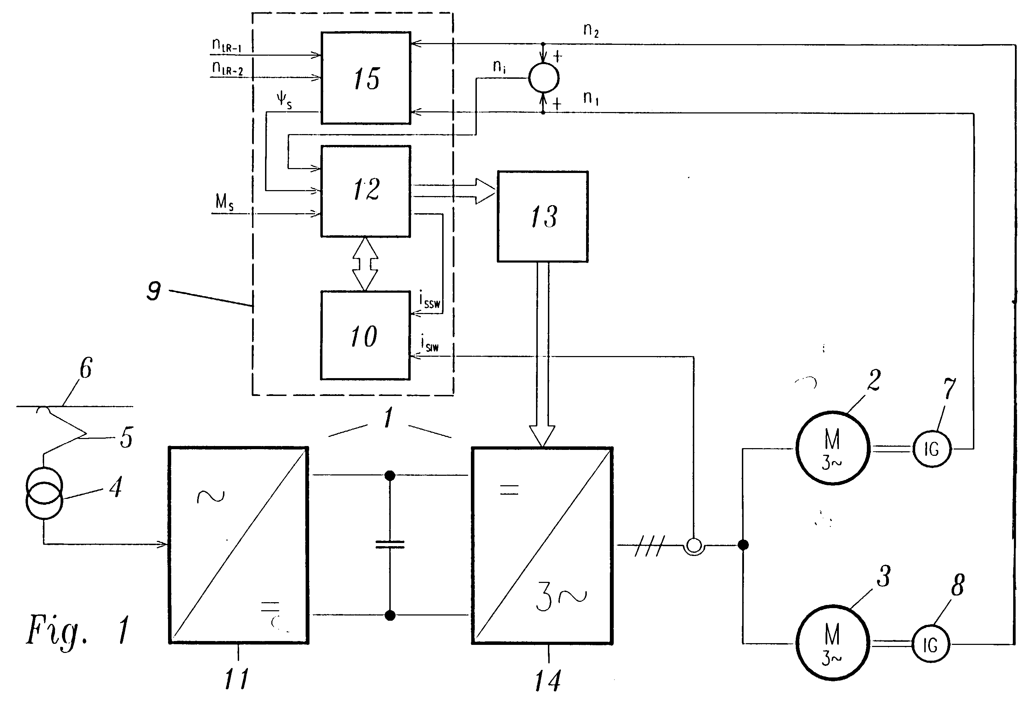

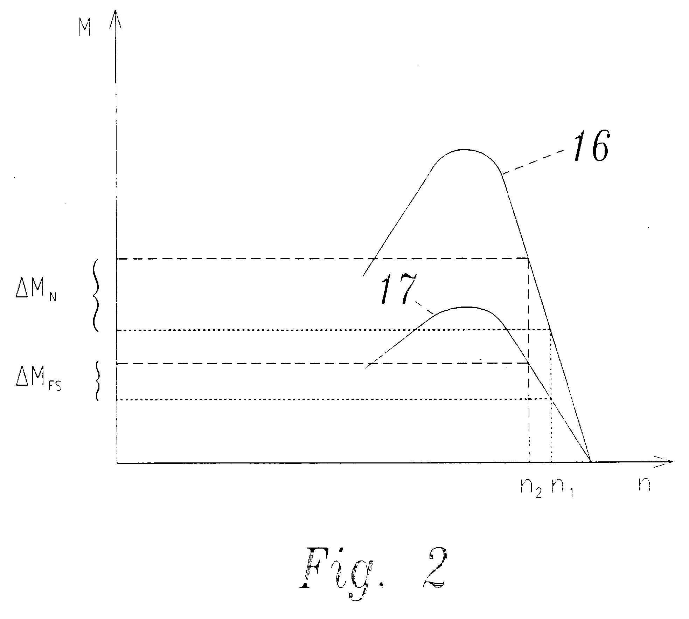

Die Erfindung wird an Hand der Zeichnungen nun noch näher erläutert. Die Fig. 1 zeigt schematisch eine mögliche Variante der erfindungsgemäßen Antriebsanordnung und in Fig. 2 sind Drehmoment/Drehzahlkennlinien eines Motors dargestellt.

In der Fig. 1 ist ein Spannungszwischenkreisumrichter 1, der zwei Antriebsmotoren 2, 3 einer Seite des Schienenfahrzeuges speist, dargestellt. Der Gleichrichter 11 des Spannungszwischenkreisumrichters 1 wird von der Fahrdrahtoberleitung 6 über einen Stromabnehmer 5 und einem Transformator 4 versorgt. Jeder Antriebsmotor 2,3, der eine Asynchronmaschine ist, ist mit einer Drehzahlerfassung 7, 8 gekuppelt. Aus den beiden erfaßten Drehzahlen n₁,n₂ wird der Mittelwert nᵢ gebildet und dem Regelungssystem 9 zugeführt. Dieses weist ein Nachführregelsystem 10 auf, das den Istwert der beiden Motorströme i_{SIW} erhält. Ein entsprechender Sollwert i_{SSW} wird von der feldorientierten Regelung 12 zur Verfügung gestellt. Durch den Fahrer wird über den Fahrtregler der feldorientierten Regelung 12 ein Drehmomentsollwert M_{S} vorgegeben. Die feldorientierte Regelung 12 ist mit dem Steuersatz 13, der das Pulsmuster für den Wechselrichter 14 bildet, verbunden. Weiters gehört zum Regelungssystem 9 noch eine Drehzahl auswertung 15 und eine Flußvorgabe 15. Der Drehzahlauswertung 15 werden die Motordrehzahlen n₁,n₂ und die Drehzahlen n_{LR-1},n_{LR-2} von zwei vor den Antriebsrädern angeordneten Laufrädern zugeführt. Von der Flußvorgabe 15 aus wird der feldorientierten Regelung 12 ein Fluß _{S} vorgegeben. Werden durch die Drehzahlauswertung 15 der Laufräder bevorstehende Drehzahlunterschiede der Antriebsräder erkannt, so wird in den Feldschwächbereich umgeschaltet, d. h. es wird der feldorientierten Regelung 12 ein verminderter Fluß _{S} vorgegeben. Die Verminderung wird in Abhängigkeit vom Drehzahlunterschied durchgeführt.

In Fig. 2 ist die Drehmomentenkennlinie eines Antriebsmotors bei voller Erregung 16 und bei einer Feldschwächung 17 mit dem Faktor 0,5 dargestellt. Es ist ersichtlich, daß bei einer gleichen Drehzahländerung n₁,n₂ im Feldschwächbereich der Drehmomentensprung M_{FS} wesentlich geringer ist als bei voller Erregung des Motors.

## Patentansprüche

1. Antriebsanordnung für ein Schienenfahrzeug, bei dem jedes angetriebene Rad mit einem Motor gekuppelt ist, und Stromrichter vorgesehen sind, von denen jeder mit einer Regelung verbunden ist, und jede Regelung im Mittel die gleiche Momentenvorgabe erhält, **dadurch gekennzeichnet,** daß jeder Stromrichter (1,11,14), der ein Spannungszwischenkreisumrichter (1,11,14) ist, mindestens zwei Motoren (2,3), die entweder fremderregte Gleichstrommotoren oder Drehstromasynchronmotoren mit einer flachen Drehmoment/Drehzahlkennlinie sind, an einer Seite des Schienenfahrzeuges speist, und daß jede Regelung (9) aus einem Nachführregelsystem (10), einer feldorientierten Regelung (12), die mit einem Steuersatz (13) verbunden ist, der das Pulsmuster für den Wechselrichter (14) des Stromrichters (1,11,14) bildet, einer Drehzahlauswertung (15) und einer Flußvorgabe (15) die der feldorientierten Regelung (12) einen Sollfluß ψ_{S} vorgibt, besteht, wobei das Nachführregelsystem (10) den Stromistwert (i_{SIW}) von den zugehörigen Motoren und einen entsprechenden Sollwert (i_{SSW}) von der feldorientierten Regelung (12) erhält, die diesen mit dem von einem Fahrtregler vorgegebenen Drehmomentsollwert (M_{S}) ermittelt, und daß an die Drehzahlauswertung (15) die Motordrehzahlen (n₁,n₂) und die Drehzahlen (n_{LR-1},n_{LR-2}) von zwei beidseitig vor den angetriebenen Rädern angeordneten Laufrädern gelangt, und daß die Drehzahlauswertung (15) der Laufräder bevorstehende Drehzahlunterschiede der angetriebenen Räder erkennt, wonach die feldorientierte Regelung (12) einen verminderten Sollfluß ψ_{S} erhält, wobei die Verminderung in Abhängigkeit vom Drehzahlunterschied erfolgt.

## Claims

1. Drive means for a railway vehicle, in which each driven wheel is coupled to a motor and current converters being provided, whereof each is connected to a control means and each control means receiving on the average the same allocation of torque, characterized in that each current converter (1, 11, 14), which is an intermediate circuit voltage converter (1, 11, 14), feeds at least two motors (2, 3) located on one side of the railway vehicle, these motors being either direct current motors with external excitation, or asynchronous motors for threephase current having a flat characteristic torque/revolution, and in that each control means (9) consists of a pursuit regulation system (10), a field oriented control (12), connected to a control set (13), constituting the impulses pattern for the dc-ac converter (14) of the current converter (1, 11, 14), a processor for the revolution speed (15) and a flux allocation means (15) allocating a target flux ψ_{S} to the field oriented control regulation (12), the pursuit regulation system (10) receiving the actual current value (i_{SIW}) from the related motors and a corresponding target value (iSIW) from the field oriented control (12), that determines it by means of the preset torque value (M_{S}) set by a travel control, and in that the motor revolution speed values (n1, n2) and the revolution speed values (ⁿLR-1, ⁿLR-2) issuing from the two rotating wheels located on either side ahead of the driven wheels, are fed to the processor (15) of the revolution speed and in that the processor for the revolution speed (15) of the mobile wheels identifies the imminent revolution differences between the driven wheels, whereafter the field oriented control (12) receives a decreased flux target value ψ_{S}, the decrease being dependent on the revolution difference.

## Revendications

1. Dispositif d'entraînement pour un véhicule ferroviaire, dans lequel chaque roue entraînée est couplée à un moteur et des convertisseurs de courant étant prévus, dont chacun est relié à une régulation et chaque régulation recevant en moyenne la même allocation de couple, caractérisé en ce que chaque convertisseur de courant (1, 11, 14), qui est un convertisseur de tension à circuit intermédiaire (1, 11, 14), alimente au moins deux moteurs (2, 3) situés sur un côté du véhicule ferroviaire, ces moteurs étant soit des moteurs à courant continu à excitation extérieure soit des moteurs asynchrones à courant triphasé ayant une caractéristique plate couple/vitesse de rotation, en ce que chaque régulation (9) est constituée d'un système de régulation de poursuite (10), d'une régulation d'orientation au champ (12), reliée à une unité de commande (13), constituant le motif d'impulsions pour l'onduleur (14) du convertisseur de courant (1, 11, 14), d'une unité de traitement de la vitesse de rotation (15) et d'une allocation de flux (15) attribuant un flux de consigne ψ_{S} à la régulation d'orientation au champ (12), le système à régulation de poursuite (10) recevant la valeur réelle de l'intensité (i_{SIW}) venant des moteurs afférents et une valeur de consigne (i_{SIW}) correspondante depuis la régulation d'orientation au champ (12), qui détermine celle-ci à l'aide de la valeur de consigne de couple (M_{S}) prédéterminée par un régulateur de roulage, et en ce qu'à l'unité de traitement de la vitesse de rotation (15) arrivent les vitesses de rotation moteur (n₁, n₂) et les vitesses de rotation (ⁿLR-1, ⁿLR-2) venant de deux roues tournantes disposées de part et d'autre devant les roues entraînées, et en ce que l'unité de traitement de la vitesse de rotation (15) des roues mobiles identifie des différences de vitesse de rotation imminentes des roues entraînées, à la suite de quoi la régulation d'orientation au champ (12) reçoit un flux de consigne ψ_{S} diminué, la diminution s'effectuant en fonction de la différence de vitesse de rotation.
